# EUROPEAN PATENT APPLICATION

(11) **EP 4 534 479 A1**
(43) Date of publication of application: **09.04.2025**
(21) Application number: 23202211.1
(22) Date of filing: 06.10.2023
(51) Int. Cl.: C01B 32/40, B82Y 30/00

(54) **METHOD FOR PRODUCING CARBON MONOXIDE OVER A MOVING BED**

(71) Applicant: BASF SE, 67056 Ludwigshafen am Rhein (DE)
(72) Inventor: BODE, Johannes, 67056 Ludwigshafen am Rhein (DE); POTTBACKER, Jan Henning Felix, 67056 Ludwigshafen am Rhein (DE); FLICK, Dieter, 67056 Ludwigshafen am Rhein (DE); RIECK, Daniela, 67056 Ludwigshafen am Rhein (DE); JOHANNSEN, Jens Peter, 67056 Ludwigshafen am Rhein (DE); KOLIOS, Grigorios, 67056 Ludwigshafen am Rhein (DE); MAYR, Lukas, 67056 Ludwigshafen am Rhein (DE); SCHEIFF, Frederik, 67146 Deidesheim (DE); SCHLERETH, David, 67056 Ludwigshafen am Rhein (DE); MUENSTER, Ingo, 67056 Ludwigshafen am Rhein (DE)
(74) Representative: Meissner Bolte Partnerschaft mbB

(57) **Abstract**

A method for producing carbon monoxide comprises allowing carbon-providing particles to flow downwardly under gravity flow as a particle bed through a reaction zone; heating the particles in the reaction zone to a temperature of at least 800 °C; feeding a feed gas stream comprising carbon dioxide through the reaction zone in counter current to the particles flow, whereby carbon-depleted particles are obtained; withdrawing the carbon-depleted particles from the reaction zone; and withdrawing a product gas stream comprising carbon monoxide from the reaction zone. The process allows for improved heat integration.

## Description

The present invention relates to a method for producing carbon monoxide.

Currently, carbon monoxide is mainly produced in an industrial scale via gasification of coal or partial oxidation of hydrocarbon such as natural gas, oil, gasolines etc. In these processes, the chemically bounded energy of the fossil fuels is used for the formation of carbon monoxide. For the transformation of the chemical industry towards net zero emissions of CO₂, alternative technologies need to be developed which reduce CO₂ emissions. Carbon Capture and Utilization (CCU) or Direct Air Capture (DAC) can be a central measure for reducing CO₂ content in the atmosphere. To utilize CO₂ for the chemical industry, it can be activated via the Boudouard reaction:

CO₂ + C → 2CO

As the reaction requires high temperatures of above 800 °C and is highly endothermic (enthalpy of formation 172.5 kJ/mol) a large-scale technical realization of the Boudouard reaction has to meet several challenges. In order to reach significant conversion rates supply of high specific surface carbon is required. Also, the process should be susceptible to be operated with renewable power sources which would lead to negative CO₂ emissions for the production of CO. Likewise, generation of waste heat should be minimized by effectively capturing and converting the sensible heat of the reaction products into a useful form without disturbing the primary operation.

In the Boudouard reaction, two moles of carbon monoxide are formed from one mole of carbon dioxide (gas) and one mole of carbon (solid). The sensible heat content of the carbon monoxide, at any temperature level, is greater than that of the corresponding quantity of carbon dioxide from which it was formed. Hence, even with a perfect heat exchanger, it is not possible to produce sufficient exit gas cooling merely by exchange against incoming carbon dioxide feed (gas).

GB 873213 discloses a method for producing a carbon monoxide-containing gas, which comprises contacting carbon dioxide with a catalyst that is a mixture of cobaltous oxide and molybdic trioxide in the presence of carbon or a normally gaseous hydrocarbon. A gaseous hydrocarbon may be first brought into contact with the catalyst to form essentially pure hydrogen and to deposit carbon on the catalyst, and the catalyst containing deposited carbon is brought into contact with carbon dioxide.

The invention relates to a method for producing carbon monoxide, comprising
allowing carbon-providing particles to flow downwardly under gravity flow as a particle bed through a reaction zone;
heating the particles in the reaction zone to a temperature of at least 800 °C;
feeding a feed gas stream comprising carbon dioxide through the reaction zone in counter current to the particles flow, whereby carbon-depleted particles are obtained;
withdrawing the carbon-depleted particles from the reaction zone; and
withdrawing a product gas stream comprising carbon monoxide from the reaction zone.

The process of the invention is suitably carried out in a moving-bed reactor. In a moving-bed reactor, a feed gas and solid material particles flow in countercurrent throughout the reactor. Typically, the process comprises feeding solid material particles to the top of the reactor, allowing the particles to flow downwardly under gravity flow as a compact column, which means that the movement of the moving bed is gravity driven.

For this purpose, the reactor is preferably a vertical elongated reactor. The particles are withdrawn from the reactor at the bottom of the reactor. Flow through the moving bed advantageously takes place homogeneously and uniformly (see for example WO 2013/004398, WO 2019/145279 and WO 2020/200522).

Suitably, the packed density of the particle bed is in the range of 300 to 7000 g/cm³, preferably 500 to 3000 g/cm³, more preferably 600 to 1500 g/cm ³.

The feed gas stream is preferably introduced via the bottom of the reactor, preferably having a temperature of 10 to 200 °C. The solid material particles are preferably introduced via the top of the reactor, preferably having a temperature of 10 to 200 °C.

The carbon-providing particles are maintained at the reaction temperature in the reaction zone. This heat is released and transferred to the feed gas. Consequently, the Boudouard reaction takes place. The carbon consumed in the reaction is provided by the carbon-providing particles, and carbon-depleted particles are continuously removed at the reactor bottom. Thus, a continuous supply of carbon for the reaction is provided. The gaseous product is cooled down at the reactor top upon contact with the cold fresh carbon-providing particles. As a consequence, the carbon-providing particles are preheated by the outlet gas before entering the reaction zone and being heated. Likewise, the feed gas is preheated by contact of the carbon-depleted particles leaving the reaction zone. Thus, the thermal energy is substantially stored in the particle bed, and the present method does not suffer from the above-described limitations of heat exchange of the product gas against the feed gas. Heat recovery rates of more than 95% of the sensible heat may be accomplished by the present method.

The product gas stream comprising carbon monoxide is preferably recovered via the top of the reactor, preferably having a temperature of 10 to 200 °C. The carbon-depleted particles are preferably recovered via the bottom of the reactor, preferably having a temperature of 10 to 200 °C. Discharging the particles may be accomplished by conventional discharge means, e.g., by a cellular wheel sluice.

The flow velocity of the carbon-providing particles is advantageously in the range of 0.005 to 0.5 cm/s. The flow velocity of the feed gas flow is advantageously in the range of 0.025 to 2 m/s.

The gas residence time in the reactor is advantageously between 0.5 and 50 s, preferably between 1 and 10 s. The residence time of the solid material particles is preferably between 0.5 and 15 hours, preferably between 1 and 10 hours and more preferably between 2 and 8 hours.

The reaction is preferably carried out at temperatures of at least 800 °C, preferably a temperature ranging from 900 to 1500 °C. The reaction is preferably carried out at pressures ranging from 1 to 20 bar (abs), more preferably 1 to 15 bar (abs).

As discussed above, the Boudouard reaction is endothermic. In a preferred embodiment, thermal energy is provided to the reaction by electrical heating. The use of electric energy as a heat source instead of heating by combustion of natural gas allows considerable advantages, in particular with regard to the ease of control. When the electricity comes from a non-fossil resource, the endothermic reaction can be implemented with negative emission of carbon dioxide.

The type of electrical heating is not particularly limited. For example, resistive heating elements may be used, which can take the shape of a wire, ribbon, sheet or strip and can be straight, meandering or coiled. Such a heating element converts electricity into heat through the process of Joule heating. In other embodiments, heat can be provided by inductive heating.

If the carbon-providing particles are electrically conductive, they may be heated by resistive heating (Joule heating), as described for example in US 2,982,622, WO 2019/145279 and WO 2020/200522. To this end, electrically conductive carbon-providing particles may be heated by an electrical potential or voltage applied across at least a portion of the particle bed.

Hence in a preferred embodiment the particles comprise electrically conductive particles, and the method comprises applying a voltage across the particle bed in the reaction zone to provide direct electric resistance heating. Electrical power may be supplied through a plurality of electrodes that are in an electrically conductive relationship with the particle bed, e.g., immersed in the particle bed. Suitable electrode assemblies are described in WO 2019/145279 A1.

The resistive thermal energy generated by passing a current through the particles may be supplemented by other heat sources. In embodiments, additional heat can be provided to the pyrolysis by preheating the feed gas that is designed to be flowed through the particle bed. In still other embodiments, additional heat can be provided by inductive heating. Optionally, additional resistive heating elements may be used.

Generally, a refractory lining electrically and thermally insulates the moving particles from the reactor shell. Typically, refractory rocks advantageously comprising aluminum oxide, zirconium oxide and mixed oxides of aluminum, magnesium, chromium, silicon are used for the refractory lining.

The reactor may include an outer pressure jacket. For ease of assembly and disassembly, the pressure jacket is preferably split in sections with flanged ends that may be secured by bolts or the like to the flange of an adjacent section of the pressure jacket or the flange of the terminal hoods of the reactor.

The moving-bed reactor provides a very good heat transfer between the gas and the particles. In addition, there is no back-mixing, and the residence time can be controlled for both phases. The counterflow operation allows the energy integration of the reactor, and the excellent heat transfer between the gas and the solid particles guarantees a thermally efficient process.

In order to optimize heat integration achieved by the counterflow of solid particles and gas, the method of the invention preferably additionally comprises
subsequently guiding the particles through a first heat integration zone located above the reaction zone, the reaction zone, and a second heat integration zone located below the reaction zone;
transferring heat from the product gas leaving the reaction zone to the particles in the first heat integration zone by direct heat transfer; and
transferring heat from particles leaving the reaction zone to the feed gas in the second heat integration zone.

There is an uninterrupted particle flow through the first heat integration zone, the reaction zone and the second heat integration zone.

Heat exchange in the heat integration zones can be optimized by varying the downward flow velocity of the particles and/or the volume flow of the feed gas to the reactor. The mass flow of solid and gas are adjusted to have the same heat capacity. With this measure heat is recovered and loss through hot gas/solid streams leaving the reactor are minimized.

In preferred embodiments, the feed gas stream comprises a diluent gas. A diluent gas is a gas that is inert under the conditions encountered in the reactor, in particular does not take part in the Boudouard reaction and does not give rise to side reactions. A suitable diluent gas is nitrogen. Carbon monoxide which is the reaction product of the Boudouard reaction may also be used as diluent gas. Incorporation of a diluent gas allows for further variation of the heat capacity of the gas stream.

When a diluent gas is used, the mass ratio of diluent gas to carbon dioxide in the feed gas stream may be in the range of 0.1:1 to 6:1.

In an embodiment, the feed gas volume flow, the proportion of diluent gas and/or the particle mass flow are selected such that the product gas temperature leaves the first heat integration zone at a temperature below 200 °C, such as below 40 °C, and/or the particles leave the second heat integration zone at a temperature of below 200 °C, such as below 100 °C.

The carbon consumed in the reaction is provided by carbon-providing particles. The carbon-providing particles may be selected from carbonaceous particles and particles of an arbitrary support material having carbon deposited thereon. For ease of reference, the particles that have released carbon and are removed from the reaction zone are referred to as "carbon-depleted particles" even though they may still be predominantly or exclusively carbon.

Suitably, the particles are selected from carbonaceous particles. They may be in the form of fines, or be agglomerated such as pelletised or granulated, if required. Carbonaceous particles may include particles of char or coke, such as calcinated pet coke, or graphite particles. Use of bio char may serve to further reduce the carbon footprint of the technology. The BET surface area of the carbonaceous particles is preferably in the range of 0.1 to 150 m²/g, preferably 20 to 100 m²/g, in particular 30 to 60 m²/g.

Particles of support material onto which carbon can be deposited include ceramic particles, silicon carbide particles, metallic particles or composites thereof. Metallic particles, may be metallic throughout or have a metallic coating over a non-metallic core. Metallic particles include conductive pre-reduced oxidic particles. As appreciated by the skilled person, carbon can also be deposited on a carbonaceous support.

The particle size may be in the range of 0.3 to 15 mm, preferably 0.5 to 10 mm, more preferably 1 to 8 mm.

In an embodiment, the Boudouard reaction is coupled with a hydrocarbon pyrolysis unit to provide the carbon-providing particles. Hydrocarbon pyrolysis involves catalytic or thermal decomposition of hydrocarbons into hydrogen and carbon. For methane, pyrolysis proceeds according to the following main reaction:

CH₄ → C + 2H₂

This combination yields a net production of synthesis gas with a 1:1 ratio of CO and H₂.

Preferably, the hydrocarbon pyrolysis is likewise carried out in a moving-bed reactor.

Hence, in an embodiment, the method of the invention further comprises:
allowing support particles to flow downwardly under gravity flow as a particle bed through a pyrolysis zone;
heating the particles in the pyrolysis zone to a temperature of at least 1000 °C;
feeding a hydrocarbon-containing pyrolysis feed gas stream through the pyrolysis zone in counter current to the support particles flow, whereby deposition of carbon on the support particles occurs;
recovering a stream of hydrogen-containing gas stream from the pyrolysis zone; and withdrawing the support particles having carbon deposited thereon and directing them as the carbon-providing particles to the reaction zone or the first heat integration zone, respectively.

The support particles used in hydrocarbon pyrolysis conveniently are carbonaceous particles, in particular carbonaceous particles having a BET surface area in the range of 0.1 to 100 m²/g, preferably 1 to 50 m²/g, in particular 5 to 20 m²/g.

The carbon-depleted particles may then be recycled to the pyrolysis zone of the hydrocarbon pyrolysis unit.

Thermal energy may be provided to the pyrolysis zone by applying an electrical potential or voltage applied across the particle bed in the pyrolysis zone.

In order to optimize heat integration in the pyrolysis unit, the method of the invention preferably additionally comprises:
subsequently guiding the particles through a first heat integration zone located above the pyrolysis zone, the pyrolysis zone, and a second heat integration zone located below the pyrolysis zone;
transferring heat from the hydrogen-containing gas leaving the pyrolysis zone to the particles in the first heat integration zone by direct heat transfer; and
transferring heat from particles leaving the pyrolysis zone to the hydrocarbon-containing feed gas in the second heat integration zone.

The hydrocarbon feed gas stream contains at least one hydrocarbon which may be selected from methane, saturated hydrocarbons, in particular saturated C₂ to C₃ hydrocarbons, or C₅₋₉ hydrocarbons. The hydrocarbon feedstock preferably includes methane as a main hydrocarbon constituent, e.g., at least 75 vol.-% of methane, preferably at least 85 vol.-% of methane. Most often, natural gas or biogas comprising methane is used as feed gas.

Alternatively, it is envisaged to perform both the Boudouard reaction and hydrocarbon pyrolysis in one moving-bed reactor:

CO₂ + CH₄ → 2CO + 2 H₂

Hence, in an embodiment, the method of the invention additionally comprises in-situ deposition of carbon on support particles to provide the carbon-providing particles by including hydrocarbon(s) in the feed gas stream and allowing hydrocarbon pyrolysis to take place concurrently in the reaction zone.

The hydrocarbon(s) may be included in the feed gas stream or guided to the reaction zone as a separate stream.

The invention is further illustrated by the following examples and the accompanying drawing.
Fig. 1a is a schematic depiction of the method of the invention. Fig. 1b depicts the temperature profile along the height of the moving-bed reactor employed in the method of Fig. 1a.
Fig. 2 shows the conversion rate of the Boudouard reaction at various temperatures and two different carbon-providing particles in accordance with Example 2.

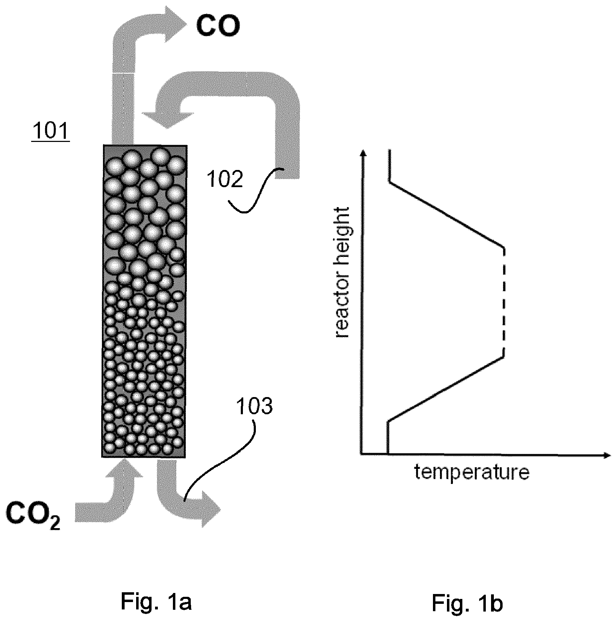

Referring to Fig. 1a, carbon-providing particles are fed to the top of a moving-bed reactor 101, as indicated by arrow 102. The carbon-providing particles are allowed to flow downwardly under gravity flow as a particle bed through a reaction zone, in which the particles are electrically heated to a temperature of 900 to 1500 °C. A feed gas stream comprising carbon dioxide is fed through the reaction zone in counter current to the particles flow, whereby carbon-depleted particles are obtained. The carbon-depleted particles are withdrawn from the bottom of the reaction zone, as indicated by arrow 103. A product gas stream comprising carbon monoxide via the top of the reaction zone.

Referring to Fig. 1b, the temperature profile along the height of the moving-bed reactor employed in the method of Fig. 1a is depicted. In the reaction zone located in the middle section of the reactor, the temperature is maintained in the range of 900 to 1500 °C. Towards both the bottom and the top of the reactor, the temperature decreases. The carbon-providing particles are preheated by the outlet gas before entering the reaction zone and being heated. Likewise, the feed gas is preheated by contact of the carbon-depleted particles leaving the reaction zone. Thus, the thermal energy is substantially stored in the particle bed.

### Example 1

A methane pyrolysis reaction over a moving carbon bed in accordance with Fig. 1a was simulated. A proprietary simulation software was used, but commercially available software such as ASPEN PLUS (AspenTech, Burlington, MASS, USA) may yield comparable results.

A carbon flow of 37981.0 kg/h is fed to the top of the reactor. Methane is fed to the bottom in counter current. A hydrogen-containing gas stream is withdrawn at the top of the reactor and carbon particles are withdrawn at the bottom of the reactor. During the reaction, carbon is deposited on the carbon particles, whereby the mass flow of carbon is increased to 40627.1 kg/h.

A Boudouard reaction is performed in a second moving-bed reactor. Operational summarized in the table below. To the top of the reactor carbon particles from the methane pyrolysis reaction are fed (carbon in). Carbon dioxide and a diluent gas (nitrogen) are fed to the bottom in counter current (gas in and diluent gas in). A carbon monoxide-containing gas stream is withdrawn at the top of the reactor (gas out) and carbon particles are withdrawn at the bottom of the reactor (carbon out). During the reaction, carbon is consumed, whereby the mass flow of carbon is reduced from 40627.1 kg/h (carbon in) to 37981.0 kg/h (carbon out). The withdrawn carbon particles are recycled to the pyrolysis rector.

| | | Carbon In | Gas In | Diluent Gas In | Gas Out | Carbon Out |
|---|---|---|---|---|---|---|
| temperature | °C | 20 | 20 | 20 | 35 | 80 |
| pressure | bar | 1 | 1 | 1 | 1 | 1 |
| enthalpy | kJ/s | 153.9 | 495.8 | 227.0 | 523.9 | 638.0 |
| average molecular weight | kg/kmol | 12.0 | 44.0 | 28.0 | 28.0 | 12.0 |
| thermal conductivity | W/(m*K) | 113.6 | 0.0 | 0.0 | 0.0 | 106.9 |
| specific heat | kJ/kg/K | 0.7 | 0.8 | 1.0 | 1.0 | 0.9 |
| density | kg/m³ | 2316.3 | 1.8 | 1.1 | 1.1 | 2308.5 |
| molar flow rate | kmol/h | 3382.5 | 221.1 | 1403.2 | 1844.6 | 3162.2 |
| mass flow rate | kg/h | 40627.1 | 9728.9 | 39307.9 | 51683.1 | 37981.0 |
| volumetric flow rate | m3/h | 17.5 | 5388.1 | 34201.4 | 47259.8 | 16.5 |
| N₂ | kg/h | | | 39307.9 | 39307.9 | |
| CO | kg/h | | | 0.0 | 12342.1 | |
| CO₂ | kg/h | | 9728.9 | 0.0 | 33.1 | |
| H₂ | kg/h | | | | | |
| C | kg/h | 40627.1 | | | | 37981.0 |

In addition, the dilution, pressure and the temperature are varied in accordance with the table below.

| | | N₂ Dilution | | | | |
|---|---|---|---|---|---|---|
| | | 600 °C | 800 °C | 900 °C | 1100 °C | 1600 °C |
| Dilution Factor | 1 bar | 157% | 386% | 404% | 427% | 459% |
| | 5 bar | 155% | 426% | 420% | 430% | 459% |
| | 10 bar | 166% | 508% | 465% | 438% | 460% |
| CO₂ Conversion | 1 bar | 44% | 98% | 100% | 100% | 100% |
| | 5 bar | 22% | 93% | 98% | 100% | 100% |
| | 10 bar | 16% | 89% | 97% | 100% | 100% |
| CO₂ In [kg/h] | 1 bar | 22235 | 9867 | 9729 | 9298 | 9696 |
| | 5 bar | 43724 | 10449 | 9855 | 9709 | 9696 |
| | 10 bar | 58828 | 10954 | 9987 | 9721 | 9696 |
| CO₂ Out [kg/h] | 1 bar | 12539 | 171 | 33 | 3 | 0.1 |
| | 5 bar | 34028 | 753 | 159 | 13 | 0.3 |
| | 10 bar | 49132 | 1258 | 291 | 25 | 0.5 |
| Diluent Gas In [kg/h] | 1 bar | 34830 | 38054 | 39308 | 41409 | 44530 |
| | 5 bar | 67708 | 44560 | 41404 | 41700 | 44546 |
| | 10 bar | 97368 | 55623 | 46390 | 42580 | 44595 |
| Difference Gas In vs. Gas Out [kg/h] | 1 bar | -2646 | -2646 | -2646 | -2646 | -2646 |
| | 5 bar | -2646 | -2646 | -2646 | -2646 | -2646 |
| | 10 bar | -2646 | -2646 | -2646 | -2646 | -2646 |

It is evident that towards higher temperatures, virtually complete CO₂ conversion can be achieved even if the feed gas stream is diluted by a diluent gas.

### Example 2

Boudouard reactions were performed in a laboratory-scale fixed-bed reactor setup with an inner tube diameter of 50 mm and a length of the fixed-bed of 0.5 m. In the center of the fixed-bed, a further tube with an outer diameter of 10 mm was arranged, which was equipped for temperature measurements. For the reaction, the reactor tube was externally heated to a temperature in the range of 900 to 1050 °C.

### Example 2 - Run 1

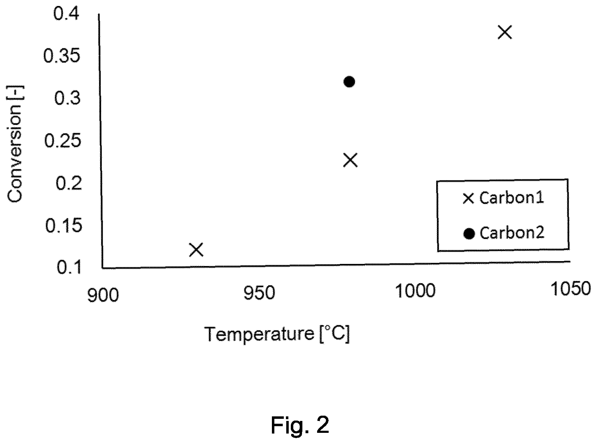

The Boudouard reaction was performed at a volume flow of carbon dioxide of 50 NI/h. A carbon-providing particle with a BET surface area in the range of 0.1 to 10 m²/g (Carbon1) was used as the fixed bed and carbon source for the reaction. The conversion at different temperatures is shown in Figure 2 (crosses).

### Example 2 - Run 2

The Boudouard reaction was performed at a volume flow of carbon dioxide of 50 NI/h. A carbon providing particle with a BET surface area in the range of 10 to 20 m²/g (Carbon2) was used as the fixed bed and carbon source for the reaction. The conversion at 980 °C is shown in Figure 2 (circle).

The measured conversion is lower as compared to the theoretical conversion calculated from chemical equilibrium. It is believed that the conversion is limited by the surface area of the solid carbon and the speed of reaction at the investigated temperature. A higher available surface area leads to higher conversion at the same temperature level. Increasing the temperature allows for increased conversion.

## Claims

1. A method for producing carbon monoxide, comprising
allowing carbon-providing particles to flow downwardly under gravity flow as a particle bed through a reaction zone;
heating the particles in the reaction zone to a temperature of at least 800 °C;
feeding a feed gas stream comprising carbon dioxide through the reaction zone in counter current to the particles flow, whereby carbon-depleted particles are obtained;
withdrawing the carbon-depleted particles from the reaction zone; and
withdrawing a product gas stream comprising carbon monoxide from the reaction zone.

2. The method according to claim 1, wherein the carbon-providing particles are selected from carbonaceous particles and particles having carbon deposited thereon.

3. The method according to claim 2, wherein the carbon-providing particles are selected from carbonaceous particles with a BET-surface in the range of 0.1 to 150 m²/g, preferably 20 to 100 m²/g, in particular 30 to 60 m²/g.

4. The method according to any one of the preceding claims, wherein the packed density of the particle bed is in the range of 300 to 7000 g/cm³, preferably 500 to 3000 g/cm³, more preferably 600 to 1500 g/cm ³.

5. The method according to any one of the preceding claims, additionally comprising
subsequently guiding the particles through a first heat integration zone located above the reaction zone, the reaction zone, and a second heat integration zone located below the reaction zone;
transferring heat from the product gas leaving the reaction zone to the particles in the first heat integration zone by direct heat transfer; and
transferring heat from particles leaving the reaction zone to the feed gas in the second heat integration zone.

6. The method according to claim 5, wherein the feed gas stream comprises a diluent gas.

7. The method according to claim 5 or 6, wherein the feed gas volume flow, the proportion of diluent gas and/or the particle mass flow are selected such that the product gas temperature leaves the first heat integration zone at a temperature below 200 °C and/or the particles leave the second heat integration zone at a temperature of below 200 °C.

8. The method according to claim 6 or 7, wherein the mass ratio of diluent gas to carbon dioxide in the feed gas stream is in the range of 0.1:1 to 6:1.

9. The method according to any one of the preceding claims, wherein the carbon-providing particles are obtained from hydrocarbon pyrolysis.

10. The method according to any one of the preceding claims, further comprising
allowing support particles to flow downwardly under gravity flow as a particle bed through a pyrolysis zone;
heating the particles in the pyrolysis zone to a temperature of at least 1000 °C;
feeding a hydrocarbon-containing pyrolysis feed gas stream through the pyrolysis zone in counter current to the support particles flow, whereby deposition of carbon on the support particles occurs;
recovering a stream of hydrogen-containing gas stream from the pyrolysis zone; and
withdrawing the support particles having carbon deposited thereon and directing them as the carbon-providing particles to the reaction zone or the first heat integration zone, respectively.

11. The method according to claim 10, further comprising recycling the carbon-depleted particles to the pyrolysis zone.

12. The method according to any one of claims 1 to 8, additionally comprising in-situ deposition of carbon on support particles to provide the carbon-providing particles by including hydrocarbon(s) in the feed gas stream and allowing hydrocarbon pyrolysis to take place concurrently in the reaction zone.
